# EUROPEAN PATENT APPLICATION

(11) **EP 4 071 735 A1**
(43) Date of publication of application: **12.10.2022**
(21) Application number: 20896182.1
(22) Date of filing: 03.12.2020
(51) Int. Cl.: G08G 1/00, G08G 1/09, G07C 5/00

(54) **STORAGE CONTROL DEVICE, CONTROL METHOD, PROGRAM, AND STORAGE MEDIUM**

(30) Priority: 04.12.2019 JP 2019219872
(71) Applicant: Pioneer Corporation, Tokyo 113-0021 (JP)
(72) Inventor: SONO, Takuhei, Kawagoe-shi, Saitama 350-8555 (JP)
(74) Representative: Viering, Jentschura & Partner mbB Patent- und Rechtsanwälte
(86) International application number: PCT/JP2020/045046
(87) International publication number: WO 2021/112179

(57) **Abstract**

A control unit 20 of a vehicle traveling data recorder 1 acquires the position of a vehicle Ve. Further, the control unit 20 acquires a captured image Im generated by a camera 12 which photographs the periphery of the vehicle Ve. Then, if the acquired position of the vehicle Ve belongs to an area where predetermined privacy processing is to be performed on an object included in the acquired captured image Im, the control unit 20 stores, in a nonvolatile memory 19, data that is the captured image to which the privacy processing is applied, and if the acquired position of the vehicle Ve does not belong to the area where the predetermined privacy processing is to be performed on the object included in the acquired captured image Im, the control unit 20 stores the captured image Im in the nonvolatile memory 19.

## Description

### TECHNICAL FIELD

The present invention relates to a technique for storing a captured image.

### BACKGROUND ART

Conventionally, a technique for storing an image taken from a vehicle is known. For example, Patent Document 1 discloses a vehicle traveling data recorder configured to store, in a storage unit, first captured data that is video data without any privacy measures when storing the captured data due to an event, and to store, in the storage unit, second captured data that is video data with a privacy measure when storing the captured data regardless of an event.

### PRIOR ART DOCUMENTS

### PATENT LITERATURE

Patent Literature 1: JP 2018-120497A

### SUMMARY

### PROBLEM TO BE SOLVED BY THE INVENTION

According to the laws of each country, there is a case that it is prohibited (regulated), in principle, to record images photographed at a public passable place from the viewpoint of protecting privacy. In such countries, it is necessary to record images taken by vehicle traveling data recorders after applying a privacy measure such as mosaic processing. On the other hand, it is desirable not to perform a mosaic processing in terms of the proof capability of the images in such a country where the recording of images photographed at a public passable place is not prohibited by law. However, there is no disclosure in Patent Document 1 regarding a method for satisfying both. The present invention has been made to solve the above issues, and a main object thereof is to provide a storage control device capable of suitably storing an image taken from the vehicle.

### MEANS FOR SOLVING THE PROBLEM

One invention is a storage control device including: a position acquisition unit configured to acquire a position of a vehicle; an image acquisition unit configured to acquire image data generated by a camera which photographs a periphery of the vehicle; and a control unit configured to store, in a storage unit, data that is the image data to which the privacy processing is applied if the position belongs to an area where a privacy processing for an object included in the image data is required, and store, in the storage unit, the image data if the position does not belong to the area.

Another invention is a control method executed by a storage control device, the control method including: a position acquisition process to acquire a position of a vehicle; an image acquisition process to acquire image data generated by a camera which photographs a periphery of the vehicle; and a control process to store, in a storage unit, data that is the image data to which the privacy processing is applied if the position belongs to an area where a privacy processing for an object included in the image data is required, and store, in the storage unit, the image data if the position does not belong to the area.

Still another invention is a program executed by a computer, the program causing the computer to function as: a position acquisition unit configured to acquire a position of a vehicle; an image acquisition unit configured to acquire image data generated by a camera which photographs a periphery of the vehicle; and a control unit configured to store, in a storage unit, data that is the image data to which the privacy processing is applied if the position belongs to an area where a privacy processing for an object included in the image data is required, and store, in the storage unit, the image data if the position does not belong to the area.

### BRIEF DESCRIPTION OF THE DRAWINGS

FIG. 1 illustrates a configuration example of a storage control system common to each embodiment.
FIG. 2 illustrates an example of a schematic configuration of a vehicle traveling data recorder.
FIGS. 3A and 3B are diagrams for explaining a determination of the need for privacy processing.
FIG. 4 illustrates an example of a flowchart indicative of the processing procedure in a first embodiment.
FIG. 5 illustrates a schematic configuration of a storage control system according to a third example of a first modification.
FIG. 6 illustrates a schematic configuration of a server device according to the third example of the first modification.
FIG. 7 illustrates an example of a flowchart indicative of the processing procedure according to the second modification.
FIG. 8 illustrates an example of a captured image.
FIGS. 9A to 9D illustrate examples of application of privacy processing to a license plate.
FIG. 10 illustrates an example of a flowchart indicative of a procedure of privacy processing to a captured image according a second embodiment.

### DETAILED DESCRIPTION OF THE PREFERRED EMBODIMENTS

In one preferred embodiment of the present invention, a storage control device includes: a position acquisition unit configured to acquire a position of a vehicle; an image acquisition unit configured to acquire image data generated by a camera which photographs a periphery of the vehicle; and a control unit configured to store, in a storage unit, data that is the image data to which the privacy processing is applied if the position belongs to an area where a privacy processing for an object included in the image data is required, and store, in the storage unit, the image data if the position does not belong to the area. According to this mode, the storage control device suitably stores image data subjected to privacy processing in an area where privacy protection issues may occur while suitably storing image data without performing unnecessary privacy processing in other areas.

In one mode of the storage control device, the area includes a recording restriction area where recording of privacy-related images photographed from a vehicle is legally restricted, and a peripheral area existing within a predetermined distance from the recording restriction area. According to this mode, even when an error occurs in the acquired position, the storage control device can reliably perform privacy process on the image data to be stored in an area where privacy protection issues may occur. In some embodiments, the predetermined distance is determined based on an error of the position acquired by the position acquisition unit

In another mode of the storage control device, the control unit determines whether or not the position of the vehicle belongs to the area by referring to area information indicating a position relating to the area. According to this mode, the storage control device can suitably determine whether or not a vehicle is situated in an area to be subject to privacy processing on an object included in the image data.

In still another mode of the storage control device, the control unit transmits information regarding the position of the vehicle to a server device which stores area information indicating a position relating to the area and thereby receives a determination result of whether or not the position of the vehicle belongs to the area from the server device. According to this mode, the storage control device can also suitably recognize whether or not a vehicle is situated in an area subject to privacy processing on an object included in the image data.

In still another aspect of the storage control device, if the position of the vehicle at a time of photographing the image data belongs to the area, the control unit stores in the storage unit the data to which the privacy processing is applied, and if the position of the vehicle at the time of photographing the image data does not belong to the area, the control unit stores the image data in the storage unit. According to this mode, the storage control device can accurately determine whether or not privacy processing is required for the image data based on the position of the vehicle at the time of photographing the image data.

In still another aspect of the storage control device, if the position of the vehicle at a time of determining necessity of the privacy processing for the image data belongs to the area, the control unit stores in the storage unit the data to which the privacy processing is applied, and if the position of the vehicle at the time of determining the necessity does not belong to the area, the control unit stores the image data in the storage unit. According to this mode, the storage control device can accurately determine whether or not privacy processing is required for the image data based on the position of the vehicle at the time of determining the necessity of privacy processing.

In a preferred example of the storage control device, the storage control device is a server device configured to receive the position of the vehicle and the image data from an in-vehicle device of the vehicle or the vehicle. In another preferred example of the storage control device, the storage control device is a vehicle traveling data recorder mounted on the vehicle.

In another preferred embodiment of the present invention, there is provided a control method executed by a storage control device, the control method including: a position acquisition process to acquire a position of a vehicle; an image acquisition process to acquire image data generated by a camera which photographs a periphery of the vehicle; and a control process to store, in a storage unit, data that is the image data to which the privacy processing is applied if the position belongs to an area where a privacy processing for an object included in the image data is required, and store, in the storage unit, the image data if the position does not belong to the area. By executing the control method, the storage control device suitably stores image data subjected to privacy processing in an area where privacy protection issues may occur while suitably storing image data without performing unnecessary privacy processing in other areas.

In still another preferred embodiment of the present invention, there is provided a program executed by a computer, the program causing the computer to function as: a position acquisition unit configured to acquire a position of a vehicle; an image acquisition unit configured to acquire image data generated by a camera which photographs a periphery of the vehicle; and a control unit configured to store, in a storage unit, data that is the image data to which the privacy processing is applied if the position belongs to an area where a privacy processing for an object included in the image data is required, and store, in the storage unit, the image data if the position does not belong to the area. By executing the program, the computer suitably stores image data subjected to privacy processing in an area where privacy protection issues may occur while suitably storing image data without performing unnecessary privacy processing in other areas. In some embodiments, the program is stored in a storage medium.

### EMBODIMENTS

Hereinafter, preferred embodiments of the present invention are described below with reference to drawings.

### <First Embodiment>

### (1) Schematic Configuration

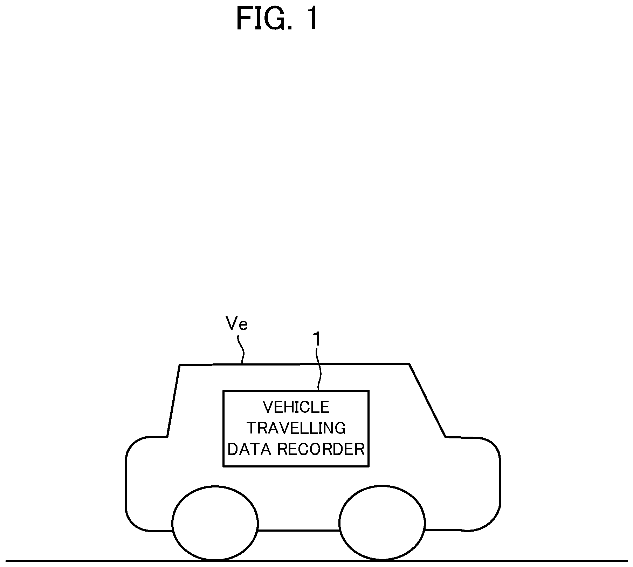

FIG. 1 shows a configuration example of a storage control system common to each embodiment. The storage control system includes a vehicle Ve and a vehicle traveling data recorder 1. The vehicle traveling data recorder 1 moves together with the vehicle Ve and stores data including an image (also referred to as "captured image Im") taken from the vehicle Ve. Further, as will be described later, in some areas, the vehicle traveling data recorder 1 performs image processing (also referred to as "privacy processing") for protecting privacy for the captured image Im to be stored. The vehicle traveling data recorder 1 may be an in-vehicle device provided in the vehicle Ve or may be a portable terminal such as a smartphone. In yet another example, the vehicle traveling data recorder 1 may be incorporated into the vehicle Ve.

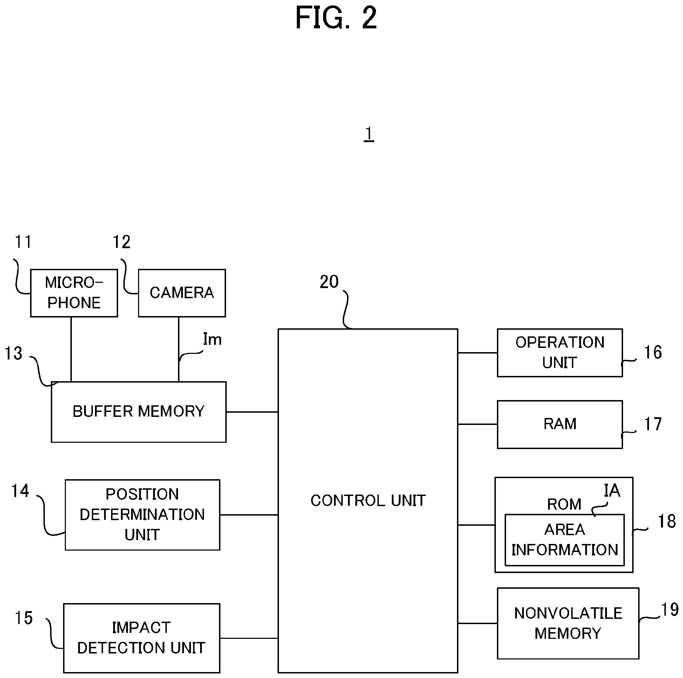

FIG. 2 shows an example of a schematic configuration of the vehicle traveling data recorder 1. As shown in FIG. 2, the vehicle traveling data recorder 1 includes a microphone 11, a camera 12, a buffer memory 13, a position determination unit 14, an impact detection unit 15, an operation unit 16, a RAM 17, a ROM 18, and a nonvolatile memory 19.

The microphone 11 picks up the sound in the interior of the vehicle Ve, and supplies a sound signal corresponding to the sound picked up to the buffer memory 13. The camera 12 is installed to capture a peripheral image of the vehicle Ve, and supplies the generated captured image Im to the buffer memory 13 at predetermined intervals.

The buffer memory 13 is a storage area which functions as a buffer for temporarily storing the sound data supplied from the microphone 11 and the captured image Im supplied from the camera 12 for a predetermined time. The control unit 20 writes the sound data and the captured image Im to the buffer memory 13 in association with the date-and-time information indicative of the shooting date and time and the position information of the vehicle Ve based on the output of the position determination unit 14. The position determination unit 14 uses GNSS (Global Navigation Satellite System) and the like to generate the position information of the vehicle Ve. Examples of the position determination unit 14 include a GPS receiver, IMUs (Inertial Measurement Unit), and any other sensors used for position measurement. If the position determination unit 14 is an external sensor to be used for position measurement, the control unit 20 may generate the position information of the vehicle Ve by estimating the position of the vehicle Ve through a known position estimation approach based on the detection signal outputted by the position determination unit 14.

The impact detection unit 15 is, for example, an acceleration sensor, and supplies a detection signal corresponding to the magnitude of the impact in the vehicle Ve to the control unit 20. The operation unit 16 is an interface for receiving a user input for instructing writing (so-called recording) of the data stored in the buffer memory 13 to the nonvolatile memory 19. The operation unit 16 may be a variety of user interfaces, such as buttons, a touch panel, a gesture recognition camera, a voice input device, and the like. The RAM 17 is a volatile memory that functions as a working area of the control unit 20.

The ROM 18 stores area information IA, which is information for determining whether or not privacy processing should be performed for each area (in particular, for each country or each of areas where laws and regulations differ). The area information IA is information for identifying the position of areas (also referred to as "recording restriction areas") where the recording of images photographed at a public passable place is regulated by law from the viewpoint of privacy protection. The area information IA may be information indicating, for each area, whether or not it corresponds to a recording restriction area, or may be map data including information relating to the recording restriction areas. In addition, the area information IA may include information indicating the boundary position (e.g., the national boundary position of the country if the recording restriction area is a country) of the recording restriction area in the absolute coordinate system based on latitude and longitude. The information indicating the boundary position of each area may be stored in the ROM 18 or the like as data independent from the area information IA.

The non-volatile memory 19 is, for example, a storage medium such as a flash memory and an SD card. Under the control of the control unit 20, the data of the sound and video for a predetermined time stored in the buffer memory 13 is written on the nonvolatile memory 19. Under the control of the control unit 20, these sound and video data is recorded in the nonvolatile memory 19 in association with the date-and-time information indicating the photographing date and time by the camera 12 (i.e., the sound pickup date and time by the microphone 11) and the position information indicating the position of the vehicle Ve at the time of photographing by the camera 12.

Examples of the control unit 20 include a CPU (Central Processing Unit) and a GPU (Graphics Processing Unit), and the control unit 20 controls the entire vehicle traveling data recorder 1. For example, if the control unit 20 detects a predetermined event (also referred to as "recording event") that is a trigger event for recording, the control unit 20 writes the data stored in the buffer memory 13 to the non-volatile memory 19. For example, the control unit 20 determines that a recording event has occurred if the magnitude of the impact indicated by the detection signal supplied from the impact detection unit 15 becomes equal to or greater than a predetermined threshold value, or if the control unit 20 receives an input signal for instructing recording from the operation unit 16. Then, the control unit 20 reads the data of the preset time length before and after the event detection time from the buffer memory 13, and writes it to the non-volatile memory 19 in association with the position information of the vehicle Ve determined by the position determination unit 14 and the date-and-time information.

If a recording event has occurred, the control unit 20 refers to the area information IA and determines whether or not privacy processing is required for the captured image Im to be written to the nonvolatile memory 19 and performs the privacy process for the captured image Im to be written to the nonvolatile memory 19 based on the determination result. Here, the privacy processing refers to image processing on the license plate of another vehicle included in the captured image Im to be performed to protect privacy, and examples of the image processing include mosaic processing, blurring processing, and mask superimposition processing for the area of the license plate. Further, an object of privacy processing may include not only the license plate of the other vehicle but also at least a portion of information relating to an individual such as a face of a person and a doorplate of a house.

The control unit 20 is an example of the "position acquisition unit", "image acquisition unit", "control unit" and a computer for executing a program.

### (2) Determination of Necessity of Privacy Processing

First, the determination of the necessity of the privacy processing by the control unit 20 will be described in detail. If the position of the vehicle Ve belongs to an area which requires the privacy processing, the control unit 20 determines that privacy processing is necessary.

In this case, in the first example, the control unit 20 refers to the area information IA, and if the control unit 20 determines that the position (also referred to as "identified vehicle position") of the vehicle Ve identified by the position determination unit 14 belongs to the recording restriction area, the control unit 20 determines that the privacy processing is necessary. In the second example, the control unit 20 considers the measurement (estimation) error of the identified vehicle position based on the output of the position determination unit 14 and determines that privacy processing is necessary if the identified vehicle position belongs to an area (i.e., the peripheral area of the recording restriction area) within a predetermined distance from the recording restriction area.

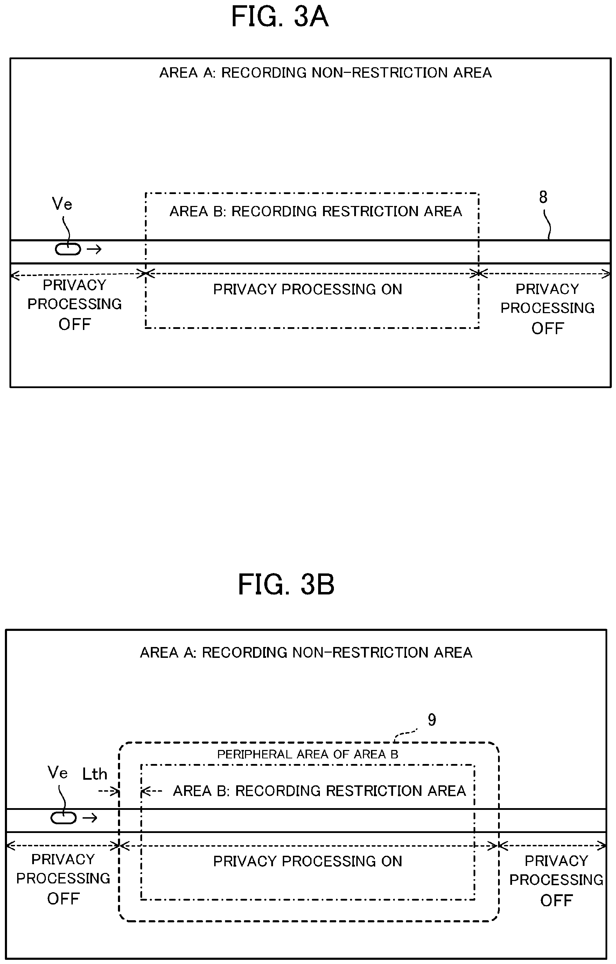

FIG. 3A is a diagram illustrating a determination of necessity of privacy processing according to the first example. In FIG. 3A, there is shown a vehicle Ve traveling on a road 8 that traverses an area A that is not a recording restriction area and an area B that is a recording restriction area adjacent to the area A. Here, in the state shown in FIG. 3A, since the vehicle Ve is present in the area A, the control unit 20 writes the data of the buffer memory 13 into the nonvolatile memory 19 without performing privacy processing if a recording event is detected.

Further, the control unit 20 recognizes, based on the area information IA, the position of the area B that is the recording restriction area closest to the position of the vehicle Ve, and compares the identified vehicle position to the position of the area B. Then, when the vehicle Ve enters the area B, the control unit 20 determines, based on the output of the position determination unit 14 and the area information IA, that the identified vehicle position belongs to the recording restriction area. Therefore, in this case, if a recording event occurs, the control unit 20 performs the privacy processing on the captured image Im to be stored in the nonvolatile memory 19. Further, when the vehicle Ve enters the area A again from the area B, the control unit 20 determines that the identified vehicle position belongs to an area that is not the recording restriction area, and writes the data of the buffer memory 13 into the nonvolatile memory 19 without performing privacy processing at the time of detection of the recording event.

FIG. 3B is a diagram illustrating a determination of the necessity of the privacy processing according to the second example. In FIG. 3B, in the same way as FIG. 3A, there is shown a vehicle Ve traveling on a road 8 traversing the area A that is not a recording restriction area and the area B that is a recording restriction area adjacent to the area A. Here, in the state shown in FIG. 3B, since the vehicle Ve is present in the area A, the control unit 20 writes the data of the buffer memory 13 into the nonvolatile memory 19 without performing the privacy processing if a recording event is detected.

Further, the control unit 20 recognizes, based on the area information IA, the position of the area B that is the recording restriction area closest to the position of the vehicle Ve, and compares the identified vehicle position to the position of the area B. Then, the control unit 20 determines that there is a possibility of the vehicle Ve entering the area B if the control unit 20 determines that the identified vehicle position is within a predetermined distance "Lth" from the area B (i.e., if the vehicle Ve is present in the peripheral area sandwiched between the broken line frame 9 and the area B) despite the identified vehicle position being outside the area B. Therefore, in this case, if the recording event is detected, the control unit 20 performs the privacy processing. Here, the predetermined distance Lth is, for example, a distance corresponding to the maximum error of the identified vehicle position and it may be stored in advance in a ROM 18 or the like or may be determined by the control unit 20 based on the error information or the like outputted by the position determination unit 14. The vehicle traveling data recorder 1 may use the area information IA, which is stored in the ROM 18 in advance, including information on the position of the area (i.e., an area surrounded by the broken line frame 9) where there is a possibility of the vehicle Ve situated in the recording restriction area, instead of determining whether or not there is a possibility of the vehicle Ve situated in the recording restriction area using the predetermined distance Lth.

Here, a supplementary description will be given of the effect of the second example. For example, in a case where the identified vehicle position identified based on the output of the position determination unit 14 includes an error due to the effect of multipath or the like of the radio waves of GNSS, the identified vehicle position may be determined not to belong to the recording restriction area even though the actual position of the present vehicle Ve belongs to the recording restriction area. In view of the above, in the second example, the control unit 20 can reliably make sure to record images with the privacy processing in the recording restriction area even when the identified vehicle position identified based on the output of the position determination unit 14 includes an error.

Next, a supplementary description will be given of a case where, around boundaries between the recording restriction area and other areas, the area where the captured image Im was photographed (i.e., the image is stored in the buffer memory 13) and the area where the determination of necessity of the privacy processing is made (i.e., the image is written to the nonvolatile memory 19) are different.

In this case, in the first determination example, the control unit 20 determines whether or not the vehicle Ve belongs to the recording restriction area, based on the position information of the vehicle Ve which is associated with the captured image Im to be recorded and which indicates the position at the time of photographing. If the position indicated by the position information of the vehicle Ve corresponding to at least one of captured images Im to be recorded belongs to the recording restriction area, the control unit 20 performs the privacy processing for all the captured images Im to be recorded. In another example, in this case, the control unit 20 performs the privacy processing only for the captured image Im whose position at the time of photographing belongs to the recording restriction area.

In the second determination example, the control unit 20 determines whether or not the vehicle Ve belongs to the recording restriction area, based on the identified vehicle position based on the output of the position determination unit 14 at the time of determination of the necessity of the privacy processing. If the identified vehicle position based on the output of the position determination unit 14 at the time of the determination of the necessity of the privacy processing belongs to the recording restriction area, the control unit 20 performs privacy processing for all the captured images Im to be recorded. In the third determination example, the control unit 20 performs privacy processing for all the captured images Im to be recorded if either or both position of the vehicle Ve at the time of photographing the captured image Im or/and the position at the time of determining the necessity of the privacy processing belongs to the area B that is the recording restriction area.

### (3) Processing flow

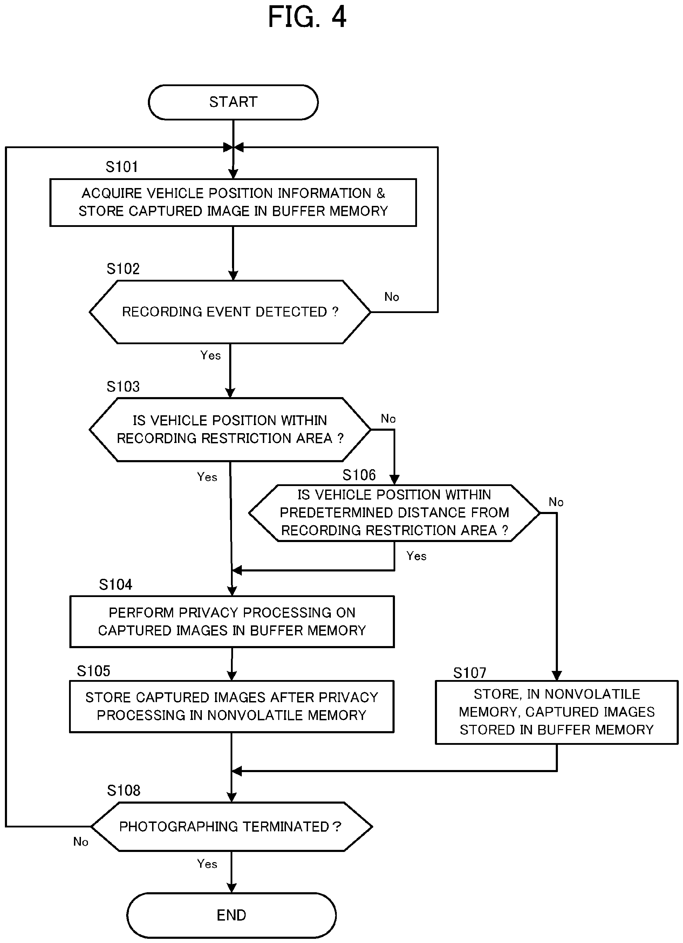

FIG. 4 is an example of a flowchart showing a processing procedure executed by the control unit 20 according to the first embodiment. The flowchart shown in FIG. 4 shows, as an example, a flow of determining whether or not privacy processing is required according to the above-described second example.

First, the control unit 20 acquires, based on the output of the position determination unit 14, the position information of the vehicle Ve indicating the identified vehicle position, and stores the captured image Im generated by the camera 12 and the sound data generated by the microphone 11 in the buffer memory 13 (step S101). At this time, in some embodiments, the control unit 20 stores the date-and-time information indicative of the shooting date and time of the captured image Im and the position information indicating the position of the vehicle Ve at the time of photographing the captured image Im in the buffer memory 13 in association with the captured image Im and sound data.

Next, the control unit 20 determines whether or not a recording event has been detected (step S102). For example, the control unit 20 determines that a recording event has occurred if the impact amount based on the output of the impact detection unit 15 is equal to or greater than a predetermined threshold value, or if the control unit 20 detects a predetermined input signal by the operation unit 16.

Next, the control unit 20 determines whether or not the identified vehicle position indicated by the vehicle position information acquired at step S101 is within the recording restriction area (step S103). When the identified vehicle position is within the recording restriction area (Step S103; Yes), the control unit 20 executes privacy processing on the captured images Im stored in the buffer memory 13 (Step S 104). Then, the control unit 20 stores (records) the captured images Im after the privacy processing in the nonvolatile memory 19 (step S105). Thereby, even in the recording restriction area, the control unit 20 can suitably continue recording while observing the privacy protection defined by the law or the like. At step S105, in addition to the captured image Im, the control unit 20 stores in the nonvolatile memory 19 the sound data generated at the same time as the captured image Im to be recorded, and date-and-time information and position information corresponding thereto.

On the other hand, if the identified vehicle position is not within the recording restriction area (step S103; No), the control unit 20 determine whether or not the identified vehicle position is within the predetermined distance Lth from the recording restriction area (step S106). Then, if the identified vehicle position is within the predetermined distance Lth from the recording restriction area (step S106; Yes), the control unit 20 determines that the vehicle Ve has possibly entered the recording restriction area. Therefore, in this case, the control unit 20 executes the step S104 and the step S 105 in the same manner as the control unit 20 does when determining that the identified vehicle position is within the recording restriction area. Thereby, the control unit 20 can reliably comply with the law concerning privacy protection in the recording restriction area, considering the possibility that the identified vehicle position includes an error.

On the other hand, if the identified vehicle position is away from the recording restriction area by more than the predetermined distance Lth (step S106; No), the control unit 20 determines that there is no need to perform the privacy processing. Therefore, in this case, the control unit 20 stores the captured images Im and the like, which are the recording target stored in the buffer memory 13, in the nonvolatile memory 19 without performing the privacy processing (step S 107). Thereby, the control unit 20 can suitably store the captured image or the like without performing unnecessary privacy processing in an area where there is no privacy protection issue. Then, the control unit 20 repeatedly executes the processes at step S101 to step S107 until the timing (e.g., timing of the power-off) at which the photographing is to be terminated (step S108).

It is noted that the control unit 20 may simultaneously made the determinations at step S103 and at step S106 regarding the necessity of the privacy process. For example, if the area information IA indicating the position of the area (i.e., the recording restriction area and its peripheral area) where the vehicle Ve is possibly in the recording restriction area is stored in ROM 18, the control unit 20 may determine whether or not the privacy processing is required by referring to the area information IA.

As described above, the control unit 20 of the vehicle traveling data recorder 1 according to the first embodiment acquires the position of the vehicle Ve. Further, the control unit 20 acquires a captured image Im generated by the camera 12 which photographs the periphery of the vehicle Ve. Then, if the acquired position of the vehicle Ve belongs to an area where predetermined privacy processing is to be performed on an object included in the acquired captured image Im, the control unit 20 stores, in the nonvolatile memory 19, data that is the captured image to which the privacy processing is applied, and if the acquired position of the vehicle Ve does not belong to the area where the predetermined privacy processing is to be performed on the object included in the acquired captured image Im, the control unit 20 stores the captured image Im in the nonvolatile memory 19. Thereby, the vehicle traveling data recorder 1 can perform recording without unnecessary privacy processing in an area where privacy protection issues do not occur. In addition, the vehicle traveling data recorder 1 can perform the recording in the recording restriction area without fail to comply with the law concerning privacy protection.

### (4) Modifications

Preferred modifications of the first embodiment will be described. The following modifications may be applied to the first embodiment described above in arbitrary combination.

### (First Modification)

A part of the process executed by the vehicle traveling data recorder 1 may be performed by a server device capable of data communication with the vehicle traveling data recorder 1. In the first example, instead of storing the data to be recorded in the nonvolatile memory 19, the vehicle traveling data recorder 1 may transmit the data to the server device and thereby store it in the server device. In the second example, the server device may make a determination on whether or not the privacy processing is required. In this case, the server device stores the area information IA, and the vehicle traveling data recorder 1 transmits the position information indicating the position of the vehicle Ve to the server device. Then, the server device determines whether or not the privacy processing is required based on the area information IA and the position information, and transmits the determination result to the vehicle traveling data recorder 1. Then, on the basis of the determination result received from the server device, the vehicle traveling data recorder 1 determines whether or not the privacy processing is required for the captured image Im to be stored in the nonvolatile memory 19. In the third example, the above-described server device may make the determination on whether or not the privacy processing is required and the recording process in substitution for the vehicle traveling data recorder 1.

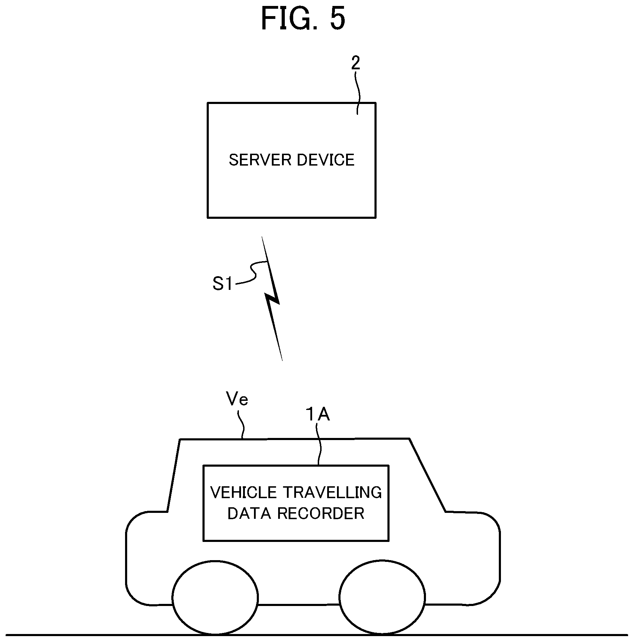

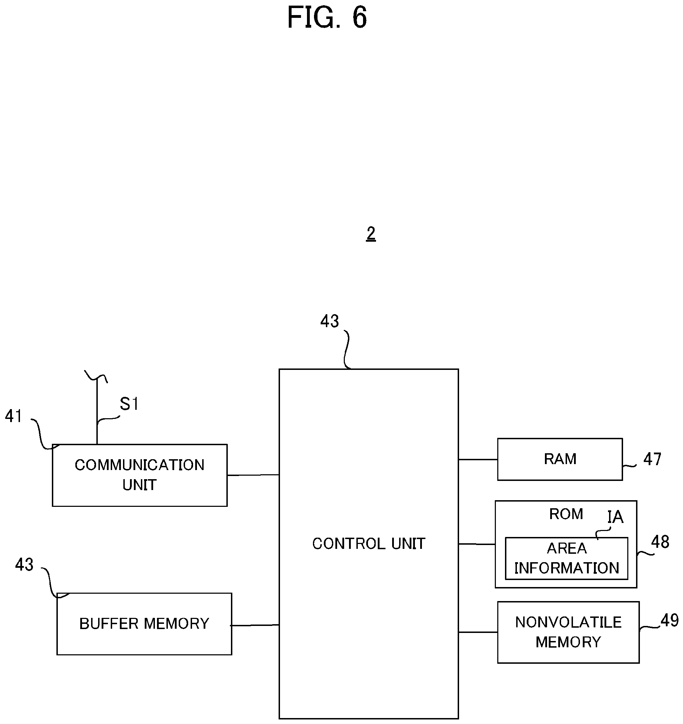

FIG. 5 shows a schematic configuration of a storage control system according to the third example of the first modification. As shown in FIG. 5, the storage control system according to the first modification includes a vehicle traveling data recorder 1A and a server device 2. Further, FIG. 6 shows a schematic configuration of the server device 2 according to the third example of the first modification. The server device 2 mainly includes a communication unit 41, a buffer memory 43, a RAM 47, a ROM 48 for storing the area information IA, and a nonvolatile memory 49.

The vehicle traveling data recorder 1A transmits to the server device 2 the upload information "S1" including: the position information indicating the position of the vehicle Ve based on the output of the position determination unit 14; the captured image Im; the detection signal outputted by the impact detection unit 15; and the input signal outputted by the operation unit 16 relating to the recording instruction. The server device 2 executes the flowchart shown in FIG. 6 based on the upload information S1. In this case, by receiving the upload information S1 from the vehicle traveling data recorder 1A, the server device 2 acquires the position information of the vehicle Ve to be acquired at step S101 and the captured image Im to be stored in the buffer memory 13 at step S101. Further, the server device 2 determines the recording event detection at step S102 based on the detection signal outputted by the impact detection unit 15 and the input signal outputted by the operation unit 16 which are included in the upload information S1. Then, at step S103 and step S106, the server device 2 refers to the area information IA (and the predetermined distance Lth) stored in the ROM 48 and determines whether or not privacy processing is required.

As described above, even in the embodiment in which a part of the process executed by the vehicle traveling data recorder 1 is executed by the server device capable of data communication with the vehicle traveling data recorder 1, it is possible to continue the recording even in the recording restriction area while observing the privacy protection laws as in the above-described embodiment.

### (Second Modification)

The vehicle traveling data recorder 1 may always store the captured image Im in the nonvolatile memory 19 regardless of whether or not a recording event is detected.

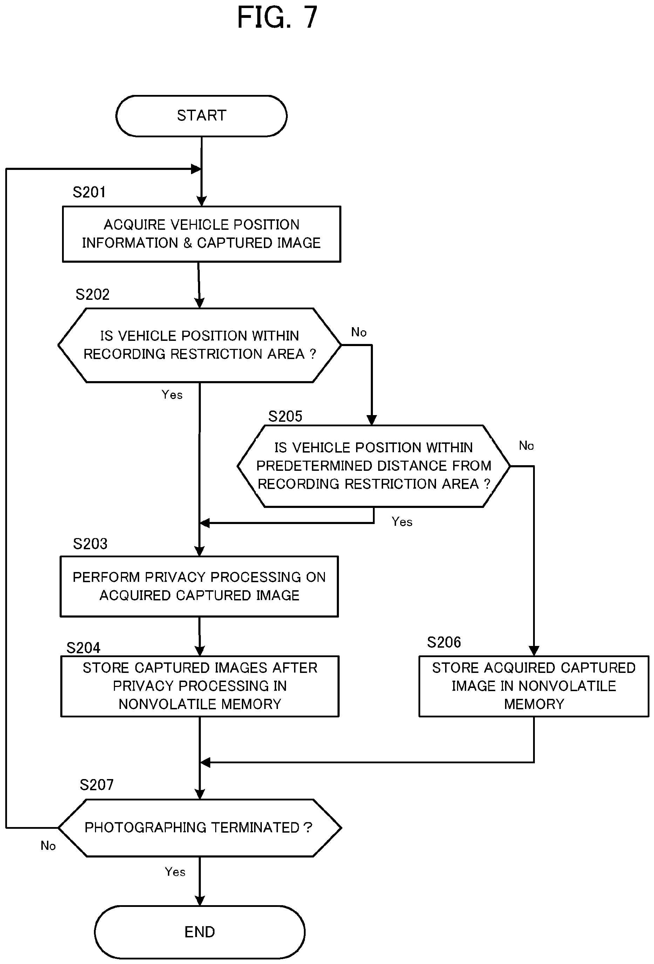

FIG. 7 is an example of a flowchart showing a processing procedure executed by the control unit 20 according to the second modification. First, the control unit 20 acquires, based on the output of the position determination unit 14, the vehicle position information indicating the identified vehicle position and acquires the captured image Im generated by the camera 12 and the sound data generated by the microphone 11 (step S201). In this case, the control unit 20 may temporarily stores the sound data and the captured image Im acquired at step S201 in the buffer memory 13.

Next, the control unit 20 determines whether or not the identified vehicle position indicated by the vehicle position information acquired at step S201 is within the recording restriction area (step S202). If the identified vehicle position is within the recording restriction area (step S202; Yes), the control unit 20 performs the privacy processing on the captured image Im acquired at step S201 (step S203). Then, the control unit 20 stores the captured image Im after the privacy process in the nonvolatile memory 19 (step S204). The control unit 20 stores sound data generated at the same time as the captured image Im and date-and-time information and position information corresponding thereto in the nonvolatile memory 19 in addition to the captured image Im subjected to the privacy process.

On the other hand, if the identified vehicle position is not within the recording restriction area (step S202; No), the control unit 20 further determine whether or not the identified vehicle position is within the predetermined distance Lth from the recording restriction area (step S205). Then, if the identified vehicle position is within the predetermined distance Lth from the recording restriction area (step S205; Yes), the control unit 20 executes step S203 and step S204 in the same manner as the control unit 20 does at the time of determining that the identified vehicle position is within the recording restriction area. On the other hand, if the identified vehicle position is away by more than the predetermined distance Lth from the recording restriction area (step S205; No), the control unit 20 stores the captured image Im and the like acquired at step S201 in the nonvolatile memory 19 without performing privacy processing (step S206). Then, the control unit 20 repeatedly executes the processes at step S201 to step S206 until the timing (for example, the timing of the power-off) at which the photographing is to be terminated (step S207).

As described above, even in the embodiment in which the generated captured image Im is always stored in the nonvolatile memory 19, the vehicle traveling data recorder 1 can continue recording even in the recording restriction area while observing the privacy protection laws and regulations as in the above-described embodiment.

### <Second Embodiment>

The second embodiment differs from the first embodiment in that the vehicle traveling data recorder 1 performs the privacy processing so as to generate a processed captured image Im in such a state to make it possible to narrow down the photographed vehicle while making identification of an individual or a vehicle impossible, instead of determining whether or not privacy processing is required. Since the configuration of the vehicle traveling data recorder 1 according to the second embodiment is the same as the configuration according to the first embodiment, a description thereof will be omitted. It is noted that the vehicle traveling data recorder 1 according to the second embodiment does not necessarily include the position determination unit 14.

Here, details of the privacy processing in the second embodiment will be described. Schematically, at the time of recording, the control unit 20 stores in the nonvolatile memory 19 the captured image Im in which only a part of the character string of the license plate of the other vehicle included in the captured image Im is made indistinguishable. Specifically, in the second embodiment, the control unit 20 does not determine whether or not privacy processing is required based on the position of the vehicle Ve, and instead performs privacy processing for all the captured images Im to be stored in the nonvolatile memory 19. In this privacy processing, as in the first embodiment, the control unit 20 performs image processing such as mosaic processing, blurring processing, and mask superimposition processing on an area of a predetermined object such as a face portion of a person, a name plate of a house, and a license plate of another vehicle. At this time, with respect to the image processing on the license plate of the vehicle, the control unit 20 performs an image processing in which only a part of the character string of the license plate is made indistinguishable. Thereby, it is possible to record the processed captured image Im capable of narrowing down the vehicle while disabling the identification of an individual or a vehicle from the stored captured image Im. Thus, the vehicle traveling data recorder 1 operates properly in both the recording restriction area and the other areas.

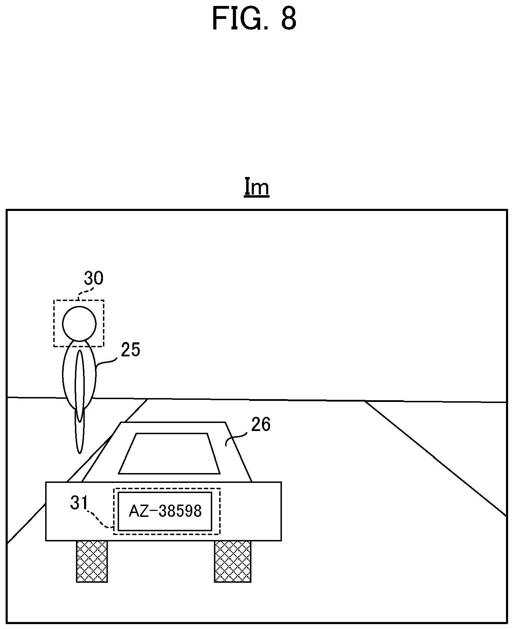

FIG. 8 shows an example of a captured image Im. The captured image Im shown in FIG. 8, the pedestrian 25, and the other vehicle 26 is included in the photographing range. When privacy processing is performed on such a captured image Im, the control unit 20 extracts an area representing a specific object such as a face portion of a person, a name plate of a house, a license plate of another vehicle, or the like by a known image recognition technique. In the example of FIG. 8, the control unit 20 extracts an area of the face of the pedestrian 25 in the broken line frame 30 and an area of the license plate in the broken line frame 31. The control unit 20 performs image processing such as mosaic processing for the entire area of the face, and performs image processing for the area of the license plate so that only a part of the character string the license plate cannot be identified.

Next, the privacy processing for the license plate will be described. The control unit 20 does not apply privacy processing to one or more characters that are a part of the character string (vehicle number) on the license plate configured by a plurality of alphabets or numbers while applying the privacy processing to the other characters of the character string.

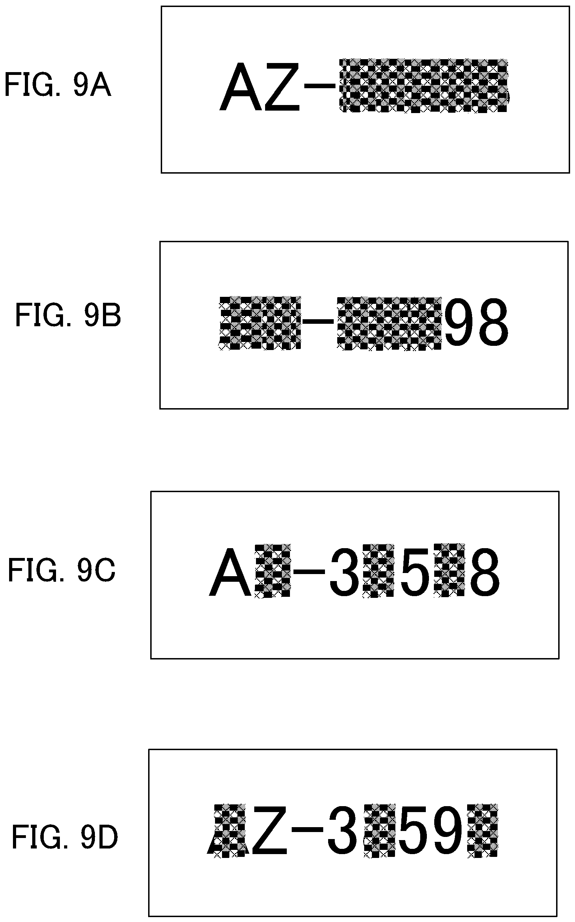

In the first example, the control unit 20 applies the privacy processing to only either one of alphabets or numbers included in the character string of the license plate. FIG. 9A shows an example of application of the privacy processing based on the first example applied to the license plate included in the captured image Im shown in FIG. 8. In the example of FIG. 9A, the control unit 20 performs the privacy processing on all numbers included in the target license plate, and does not perform privacy processing on any alphabets. Instead of FIG. 9A, the control unit 20 may apply privacy processing to all the alphabets included in the target license plate while leaving all the numbers as it is.

In the second example, the control unit 20 applies the privacy processing to all characters other than last characters or leading characters among the character string of the license plate. FIG. 9B shows an example of application of privacy processing based on the second example for the license plate included in the captured image Im shown in FIG. 8. In this case, the control unit 20 does not apply the privacy processing to the last two characters of the character string of the target license plate, and apply the privacy processing to the other characters. In the second example, the control unit 20 determines the number of characters N that is not subject to the privacy process so that "2 ≦ N < Nmax" provided that "Nmax" denotes the number of characters of the license plate and "N" denotes the number of characters that are not subject to the privacy process.

In the third example, the control unit 20 applies the privacy processing to all characters other than a plurality of characters that are situated at a predetermined position with respect to the leading character or applies the privacy processing to all characters other than a plurality of characters that are situated at a randomly determined position with respect to the leading character. FIGS. 9C and 9D illustrate examples of applications of privacy processing based on a third example for the license plate included in the captured image Im shown in FIG. 8. In the example of FIG. 9C, the control unit 20 does not apply the privacy processing to the characters which are situated in predetermined orders (first, third, fifth and seventh in this case) while applying privacy processing to the characters in the other orders (second, fourth and sixth in this case). In the example of FIG. 9D, the control unit 20 determines the number of characters N that is not subject to privacy processing to be "N = 4" that is a predetermined number or a randomly determined number, and then randomly determines characters (in this case, the second, third, fifth, and sixth) that are not subject to privacy processing. In the third example, the control unit 20 determines the number of characters N not subject to privacy processing so that "2 ≦ N < Nmax".

According to these examples, the control unit 20 can suitably process the license plate of the captured image Im to be recorded so as to be capable of narrowing down the captured vehicle while disabling identification of the individual or the vehicle.

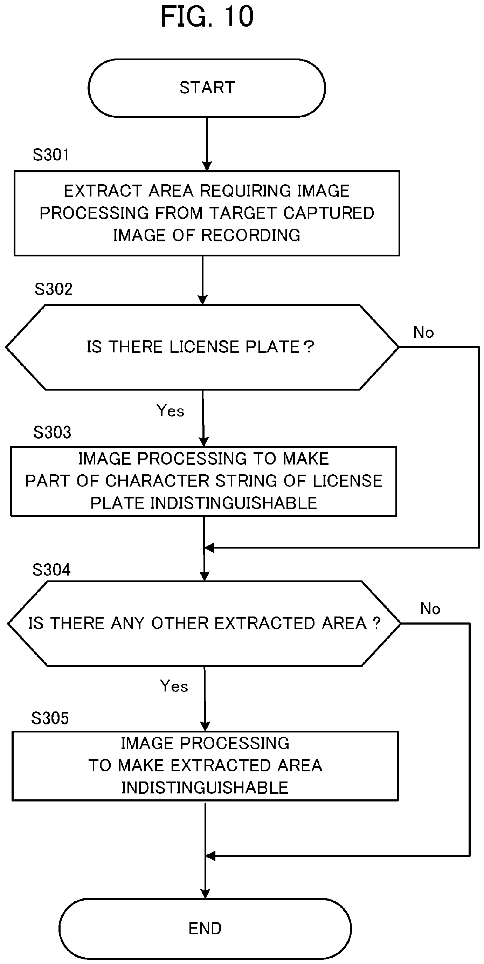

FIG. 10 is an example of a flowchart illustrating a procedure of privacy processing for the target captured image Im of recording to be executed in the second embodiment. For example, if the recording event is detected, the control unit 20 performs the privacy processing shown in FIG. 10 with respect to the target captured image Im of recording, and then stores the captured image Im after the privacy processing in the nonvolatile memory 19.

First, the control unit 20 extracts an area requiring image processing from the target captured image Im of recording (step S301). The control unit 20 may perform extraction of an area of a predetermined object (a face, a license plate, or the like) by template matching, or may perform extraction of the area of the predetermined object by inputting a captured image Im to a machine-learned inference model learned to extract a specific area from the input image.

Next, the control unit 20 determines whether or not there is an area of the license plate among the area(s) extracted at step S301 (step S302). Then, if the area of the license plate exists (step S302; Yes), the control unit 20 performs image processing so that a part of the character string of the license plate becomes indistinguishable (step S303). Thereby, the license plate of the target captured image Im of recording can be suitably processed to make it possible to narrow down the captured vehicle while disabling identification of the individual or the vehicle.

Then, after performing the image processing so that a part of the character string of the license plate becomes indistinguishable, or if there is no area of the license plate (step S302; No), the control unit 20 determines whether or not there is another extracted area other than the license plate (step S304). Then, if there is another extracted area other than the license plate (step S304; Yes), the control unit 20 performs image processing so that the area becomes indistinguishable (step S305). On the other hand, if there is no other extracted area other than the license plate (step S304; No), the control unit 20 terminates the process of the flowchart.

As described above, the control unit 20 of the vehicle traveling data recorder 1 according to the second embodiment acquires a captured image Im generated by the camera 12 which photographs the periphery of the vehicle Ve. Then, the control unit 20 stores image data in the nonvolatile memory 19, wherein the image data is processed to be in a state where only a part of a character string of a license plate of another vehicle is made indistinguishable. Thereby, it is possible to suitably process the license plate of the target captured image Im of recording so as to make it possible to narrow down the captured vehicle while disabling identification of the individual or the vehicle. Each of the modifications of the first embodiment is suitably applied to the second embodiment.

### <Third Embodiment>

In the third embodiment based on the first embodiment, the vehicle traveling data recorder 1 determines whether or not privacy processing is required for the captured image Im to be written to the nonvolatile memory 19 based on the position of the vehicle Ve, and when it is determined that privacy processing is unnecessary, the vehicle traveling data recorder 1 does not perform the privacy processing for the captured image Im to be written to the nonvolatile memory 19. On the other hand, when it is determined that the privacy processing is necessary, the vehicle traveling data recorder 1 performs privacy processing based on the flowchart indicated by FIG. 10 for the captured image Im to be written to the nonvolatile memory 19 based on the second embodiment. In this case, the control unit 20 disables identification of only a part of the character string of the license plate of another vehicle included in the captured image Im. In other words, in the third embodiment, the control unit 20 executes the flowchart indicated by FIG. 4 or FIG. 7, and at step S104 or step S203, the control unit 20 performs the privacy processing based on the flowchart indicated by FIG. 10.

With this configuration, the vehicle traveling data recorder 1 can record images in such a state capable of narrowing down the vehicle while disabling identification of individuals or vehicles from recorded images in a recording restriction area where recording of captured images at a public passable place is legally prohibited. The vehicle traveling data recorder 1 can also record captured images that lead to the identification of individuals or vehicles in areas where recording of captured images at a public passable place is not legally forbidden.

### DESCRIPTION OF REFERENCE NUMERALS

- 1, 1A: Vehicle traveling data recorder
- 2: Server device
- 11: Microphone
- 12: Camera
- 13: Buffer memory
- 14: Position determination unit
- 15: Impact detection unit
- 16: Operation unit
- 17: RAM
- 18: ROM
- 19: Nonvolatile memory
- 20: Control unit

## Claims

1. A storage control device comprising:
a position acquisition unit configured to acquire a position of a vehicle;
an image acquisition unit configured to acquire image data generated by a camera which photographs a periphery of the vehicle; and
a control unit configured to
store, in a storage unit, data that is the image data to which the privacy processing is applied if the position belongs to an area where a privacy processing for an object included in the image data is required, and
store, in the storage unit, the image data if the position does not belong to the area.

2. The storage control device according to claim 1,
wherein the area includes
a recording restriction area where recording of privacy-related images photographed from a vehicle is legally restricted, and
a peripheral area existing within a predetermined distance from the recording restriction area.

3. The storage control device according to claim 2,
wherein the predetermined distance is determined based on an error of the position acquired by the position acquisition unit.

4. The storage control device according to any one of claims 1 to 3,
wherein the control unit determines whether or not the position of the vehicle belongs to the area by referring to area information indicating a position relating to the area.

5. The storage control device according to any one of claims 1 to 3,
wherein the control unit transmits information regarding the position of the vehicle to a server device which stores area information indicating a position relating to the area and thereby receives a determination result of whether or not the position of the vehicle belongs to the area from the server device.

6. The storage control device according to any one of claims 1 to 5,
wherein, if the position of the vehicle at a time of photographing the image data belongs to the area, the control unit stores in the storage unit the data to which the privacy processing is applied, and
wherein, if the position of the vehicle at the time of photographing the image data does not belong to the area, the control unit stores the image data in the storage unit.

7. The storage control device according to any one of claims 1 to 5,
wherein, if the position of the vehicle at a time of determining necessity of the privacy processing for the image data belongs to the area, the control unit stores in the storage unit the data to which the privacy processing is applied, and
wherein, if the position of the vehicle at the time of determining the necessity does not belong to the area, the control unit stores the image data in the storage unit.

8. The storage control device according to any one of claims 1 to 7,
wherein the storage control device is a server device configured to receive the position of the vehicle and the image data from an in-vehicle device of the vehicle or the vehicle.

9. The storage control device according to any one of claims 1 to 7,
wherein the storage control device is a vehicle traveling data recorder mounted on the vehicle.

10. A control method executed by a storage control device, the control method comprising:
a position acquisition process to acquire a position of a vehicle;
an image acquisition process to acquire image data generated by a camera which photographs a periphery of the vehicle; and
a control process to
store, in a storage unit, data that is the image data to which the privacy processing is applied if the position belongs to an area where a privacy processing for an object included in the image data is required, and
store, in the storage unit, the image data if the position does not belong to the area.

11. A program executed by a computer, the program causing the computer to function as:
a position acquisition unit configured to acquire a position of a vehicle;
an image acquisition unit configured to acquire image data generated by a camera which photographs a periphery of the vehicle; and
a control unit configured to
store, in a storage unit, data that is the image data to which the privacy processing is applied if the position belongs to an area where a privacy processing for an object included in the image data is required, and
store, in the storage unit, the image data if the position does not belong to the area.

12. A storage medium storing the program according to claim 11.
